# EUROPEAN PATENT SPECIFICATION

(11) **EP 0 664 601 B1**
(45) Date of publication and mention of the grant of the patent: **21.04.1999**
(21) Application number: 95300274.8
(22) Date of filing: 17.01.1995
(51) Int. Cl.: H02P 7/05, H02K 37/04

(54) **Pulsed synchronous reluctance motor**
Reluktanz-Schrittsynchronmotor
Moteur synchrone pas à pas à reluctance

(30) Priority: 20.01.1994 GB 9401023
(43) Date of publication of application: 26.07.1995
(73) Proprietor: UNIVERSITY OF LEICESTER, Leicester, LE1 7RH (GB)
(72) Inventor: Lefley, Paul William, Loughborough, Leicestershire LE12 9PP (GB)
(74) Representative: McNeight, David Leslie

(56) References cited:
- EP-A- 0 387 467
- EP-A- 0 571 314
- EP-A- 0 577 843
- EP-A- 0 632 572
- WO-A-93/12573
- PATENT ABSTRACTS OF JAPAN vol. 10 no. 359 (E-460) ,3 December 1986 & JP-A-61 157282 (RICOH CO. LTD.) 16 July 1986,

## Description

This invention relates to electric motors.

EP 0 632 572 A1 discloses a 3 phase pulsed synchronous reluctance motor, comprising a stator having 6 coils and a salient pole rotor having 2 poles, driven by current pulses applied to each phase in turn, in which the direction of current pulses applied to a phase is reversed between successive applications of pulses to said phase. EP 0 632 572 A1 is prior art in DE, FR and GB by virtue of Articles 54(3) and 54(4) EPC.

The invention comprises an n-phase (n ≥ 3), pulsed synchronous reluctance motor as claimed in claim 1, with preferred embodiments as claimed in dependent claims 2 to 14.

The stator may be salient or not. A rotor pole may in any event have an angular extent substantially equal to that of a coil.

The coils may substantially occupy all the circumference of the stator, either in juxtaposition or with (substantial) overlap.

The rotor and stator may comprise laminations.

The rotor, however, may be unlaminated and may be of a ferromagnetic material other than iron.

The motor may incorporate a drive arrangement supplying the current pulses sequentially to the phases. The drive arrangement may comprise a power converter

supplied with direct current (which may, of course, be supplied with rectified alternating current from a reversible rectifier) and which may comprise electronic switches.

The power converter may be controlled by a motor speed derived signal, as from a shaft encoder. A variable frequency source may be connected to the power converter to control the coil switching frequency and hence motor frequency.

Embodiments of motors according to the invention will now be described with reference to the accompanying drawings, in which :-
- Figure 1: is a diagrammatic cross-section through a motor;
- Figure 2: is a diagrammatic illustration of one form of power converter arrangement driving the motor;
- Figure 3: is a diagrammatic illustration of another form of power converter arrangement driving the motor;
and
- Figure 4: is a diagrammatic illustration of a motor and control arrangement.

The drawings illustrate a 3-phase, pulsed synchronous reluctance motor comprising a stator 11 having three pairs of overlapping coils A,A' ; B,B' ; C,C') and a salient pole rotor 12 having two-poles 12,12'.

The number of rotor poles is equal to the number of coils divided by the number of phases and the ratio of coils to rotor poles is an integer. The number of rotor poles must be even, for balanced operation.

Other configurations could thus have twelve coils, three phases and four rotor poles, or twelve coils, six phases and two rotor poles, or twenty coils, five phases and four rotor poles, for example.

As illustrated, the stator 11 is not salient, which is probably the simpler and less expensive arrangement, but advantage might be found in some circumstances in stator saliency.

An efficient arrangement has the coils occupying substantially all the circumference of the stator 11, and overlapping. The windings may be confined to stator slots at the extremities of the angular extent of the coils, which simplifies winding (and re-winding).

The rotor and stator are made as usual from laminations. However, the rotor at least may be made from unlaminated material, which may be ferromagnetic, other than iron, if desired.

The motor is powered by AC current pulses in the coils. The phases may be excited singly or with conduction overlap. When the motor is correctly energised, the rotor follows an incrementally rotating magnetic field.

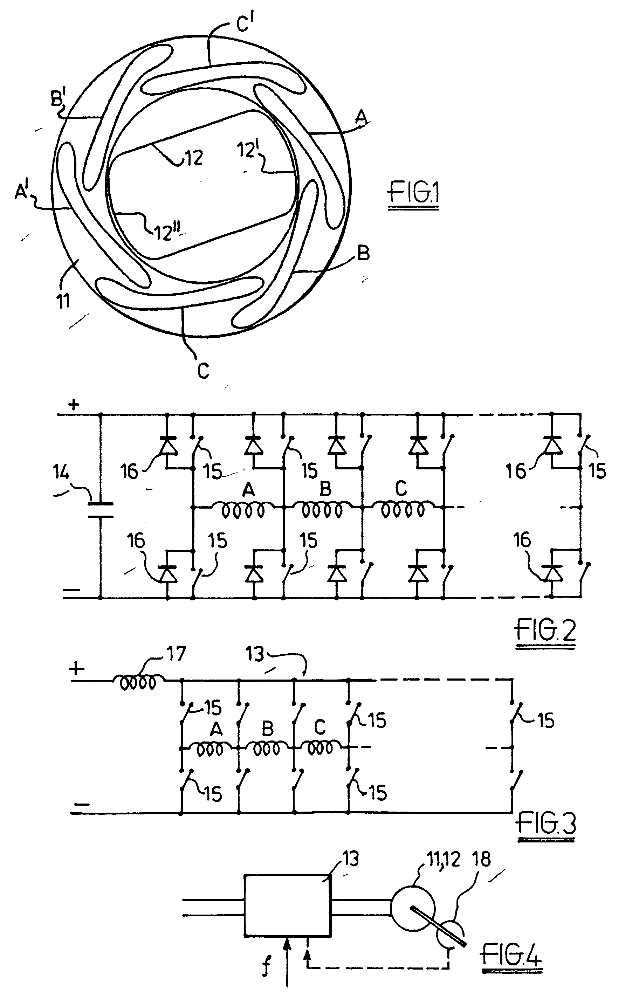

Drive arrangements illustrated in Figures 2 and 3 comprise power converters 13 supplied with direct current and comprising electronic switches 15 such as transistors, IGBT's, mosfets and so on. The arrangement of Figure 2 is a voltage fed arrangement with a capacitor 14 and diodes 16, that of Figure 3 being current fed and having an inductor 17. As indicated in Figure 4, the switches 15 are controlled by an input frequency f which sets the motor speed, and signals from a shaft encoder 18 input to the power converter 13 can also control the switching sequence.

At start-up, a soft start can be had by chopping the pulses, which can, of course, be controlled electronically.

The motors described and illustrated are synchronous - useful, for example, for clocks and timers - and are readily speed-controlled. They are efficient, with efficiencies of 80-90% being obtained, even taking into account the power converter losses. The motors are inexpensive to produce, the rotor in particular being of very simple configuration, while the stator may require less winding - and in some cases fewer slots - than other types of motor. Insulation - a necessary component of any electric motor, but one which essentially does not contribute to the power output - may be reduced as compared to conventional motors.

The simple configuration of the rotor makes possible high rotational speeds, say 10,000 rpm or more, without risk of disintegration.

Electronic switching devices are available which can carry large current loads, enabling large motors to be constructed using them. The efficiency and controllability of the motors according to the invention makes them very suitable for traction purposes.

Although the coils A,A' ; B,B' ; C,C' overlap in the embodiment illustrated, they could be arranged in juxtaposition, i.e. without overlap.

## Claims (Claims for the following Contracting State(s): AT, BE, CH, LI, DK, ES, GR, IE, IT, LU, MC, NL, PT, SE)

1. An n-phase (n ≥ 3), pulsed synchronous reluctance motor and at least one drive arrangement therefor comprising a stator having C coils and a salient pole rotor having P poles, where P = C/n and C/P is an integer, the motor producing reluctance torque when there is variable misalignment between the rotor poles and the magnetic poles of the stator, and the motor being energised by switched current pulses such that the salient pole rotor synchronously follows a continuous non-sinusoidal incrementally rotating magnetic field developed by the stator.

2. A motor according to claim 1 driven by current pulses applied to each phase in turn by the drive arrangement or arrangements in which the direction of current pulses applied to a phase is reversed between successive applications of pulses to said phase.

3. A motor according to claim 1 or claim 2 in which n = 3 and C = 6.

4. A motor according to claim 1 or claim 2 in which P does not equal 2.

5. A motor according to claim 4 in which P = 4.

6. A motor according to any of claims 1 to 5 in which the stator is not salient.

7. A motor according to any one of claims 1 to 6, in which a rotor pole has an angular extent substantially equal to that of a coil.

8. A motor according to any one claims 1 to 7, in which the coils occupy substantially all the circumference of the stator.

9. A motor according to claim 8, in which the coils overlap.

10. A motor according to claim 8, in which the coils are in juxtaposition.

11. A motor according to any one of claims 1 to 10, in which the rotor and stator comprise laminations.

12. A motor according to any previous claim, said at least one drive arrangement comprising a power converter supplied with direct current.

13. A motor according to claim 12, in which said power converter comprises electronic switches.

14. A motor according to claim 12 or claim 13, in which the power converter is controlled by a motor speed derived signal.

15. A motor according to claim 14, in which the motor has a shaft encoder supplying a control signal to the power converter.

16. A motor according to any one of claims 12 to 15, comprising a variable frequency source connected to the power converter to control the coil switching frequency and hence motor speed.

## Claims (Claims for the following Contracting State(s): DE, FR, GB)

1. An n-phase (n ≥ 3), pulsed synchronous reluctance motor and at least one drive arrangement therefor comprising a stator having C coils and a salient pole rotor having P poles, where P = C/n and C/P is an integer, the motor producing reluctance torque when there is variable misalignment between the rotor poles and the magnetic poles of the stator, and the motor being energised by switched current pulses such that the salient pole rotor synchronously follows a continuous non-sinusoidal incrementally rotating magnetic field developed by the stator, and P is not equal to 2.

2. A motor according to claim 1 driven by current pulses applied to each phase in turn by the drive arrangement or arrangements in which the direction of current pulses applied to a phase is reversed between successive applications of pulses to said phase.

3. A motor according to claim 1 or claim 2 in which P = 4.

4. A motor according to any of claims 1 to 3 in which the stator is not salient.

5. A motor according to any one of claims 1 to 4, in which a rotor pole has an angular extent substantially equal to that of a coil.

6. A motor according to any one of claims 1 to 5, in which the coils occupy substantially all the circumference of the stator.

7. A motor according to claim 6, in which the coils overlap.

8. A motor according to claim 6, in which the coils are in juxtaposition.

9. A motor according to any one of claims 1 to 8, in which the rotor and stator comprise laminations.

10. A motor according to any previous claim, said at least one drive arrangement comprising a power converter supplied with direct current.

11. A motor according to claim 10, in which said power converter comprises electronic switches.

12. A motor according to claim 10 or claim 11, in which the power converter is controlled by a motor speed derived signal.

13. A motor according to claim 12, in which the motor has a shaft encoder supplying a control signal to the power converter.

14. A motor according to any one of claims 10 to 13, comprising a variable frequency source connected to the power converter to control the coil switching frequency and hence motor speed.

## Patentansprüche (Patentansprüche für folgende(n) Vertragsstaat(en): AT, BE, CH, LI, DK, ES, GR, IE, IT, LU, MC, NL, PT, SE)

1. Ein n-phasiger (n ≥ 3) Reluktanz-Schrittsynchronmotor und zumindest eine Antriebsanordnung hierfür, mit einem Stator mit C Spulen und einem Schenkelpolläufer mit P Polen, wobei P = C/n und C/P eine ganze Zahl ist, und wobei der Motor ein Reluktanz-Drehmoment erzeugt, wenn eine variable Versetzung zwischen den Läuferpolen und den magnetischen Polen des Stators vorliegt, und der Motor durch geschaltete Stromimpulse derart erregt wird, daß der Schenkelpolläufer synchron einem von dem Stator entwickelten, kontinuierlichen nichtsinusförmigen, sich zunehmend drehenden magnetischen Feld folgt.

2. Motor nach Anspruch 1, angetrieben durch Stromimpulse, die durch die Antriebsanordnung oder -anordnungen nacheinander jeder Phase zugeführt werden, wobei die Richtung der einer Phase zugeführten Stromimpulse zwischen aufeinanderfolgenden Impulszuführungen umgekehrt ist.

3. Motor nach Anspruch 1 oder Anspruch 2, bei welchem n = 3 und C = 6 sind.

4. Motor nach Anspruch 1 oder Anspruch 2, bei welchem P nicht gleich 2 ist.

5. Motor nach Anspruch 4, bei welchem P = 4 ist.

6. Motor nach einem der Ansprüche 1 bis 5, bei welchem der Stator nicht vorstehend ist.

7. Motor nach einem der Ansprüche 1 bis 6, bei welchem ein Läuferpol eine winkelmäßige Ausdehnung hat, die im Wesentlichen gleich der einer Spule ist.

8. Motor nach einem der Ansprüche 1 bis 7, bei welchem die Spulen im Wesentlichen den gesamten Umfang des Stators einnehmen.

9. Motor nach Anspruch 8, bei welchem die Spulen einander überlappen.

10. Motor nach Anspruch 8, bei welchem die Spulen nebeneinander liegen.

11. Motor nach einem der Ansprüche 1 bis 10, bei welchem der Läufer und der Stator laminiert sind.

12. Motor nach einem der vorhergehenden Ansprüche, bei dem die mindestens eine Antriebsanordnung einen mit Gleichstrom belieferten Leistungswandler aufweist.

13. Motor nach Anspruch 12, bei welchem der Leistungswandler elektronische Schalter aufweist.

14. Motor nach Anspruch 12 oder Anspruch 13, bei welchem der Leistungswandler durch ein von der Motorgeschwindigkeit abgeleitetes Signal gesteuert wird.

15. Motor nach Anspruch 14, bei welchem der Motor einen Wellenkodierer aufweist, der ein Steuersignal zu dem Leistungswandler liefert.

16. Motor nach einem der Ansprüche 12 bis 15, welcher eine Quelle für variable Frequenz aufweist, die mit dem Leistungswandler verbunden ist, um die Spulenumschaltfrequenz und damit die Motorgeschwindigkeit zu steuern.

## Patentansprüche (Patentansprüche für folgende(n) Vertragsstaat(en): DE, FR, GB)

1. Ein n-phasiger (n ≥ 3) Reluktanz-Schrittsynchronmotor und zumindest eine Antriebsanordnung hierfür, mit einem Stator mit C Spulen und einem Schenkelpolläufer mit P Polen, wobei P = C/n und C/P eine ganze Zahl ist, und wobei der Motor ein Reluktanz-Drehmoment erzeugt, wenn eine variable Versetzung zwischen den Läuferpolen und den magnetischen Polen des Stators vorliegt und der Motor durch geschaltete Stromimpulse derart erregt wird, daß der Schenkelpolläufer synchron einem von dem Stator entwickelten, kontinuierlichen nichtsinusförmigen, sich zunehmend drehenden magnetischen Feld folgt, und wobei P nicht gleich 2 ist.

2. Motor nach Anspruch 1, angetrieben durch Stromimpulse, die durch die Antriebsanordnung oder -anordnungen nacheinander jeder Phase zugeführt werden, wobei die Richtung der einer Phase zugeführten Stromimpulse zwischen aufeinanderfolgenden Impulszuführungen umgekehrt ist.

3. Motor nach Anspruch 1 oder Anspruch 2, bei welchem P = 4 ist.

4. Motor nach einem der Ansprüche 1 bis 3, bei welchem der Stator nicht vorstehend ist.

5. Motor nach einem der Ansprüche 1 bis 4, bei welchem ein Läuferpol eine winkelmäßige Ausdehnung hat, die im Wesentlichen gleich der einer Spule ist.

6. Motor nach einem der Ansprüche 1 bis 5, bei welchem die Spulen im Wesentlichen den gesamten Umfang des Stators einnehmen.

7. Motor nach Anspruch 6, bei welchem die Spulen einander überlappen.

8. Motor nach Anspruch 6, bei welchem die Spulen nebeneinander liegen.

9. Motor nach einem der Ansprüche 1 bis 8, bei welchem der Läufer und der Stator laminiert sind.

10. Motor nach einem der vorhergehenden Ansprüche, bei welchem die mindestens eine Antriebsanordnung einen mit Gleichstrom belieferten Leistungswandler aufweist.

11. Motor nach Anspruch 10, bei welchem der Leistungswandler elektronische Schalter aufweist.

12. Motor nach Anspruch 10 oder Anspruch 11, bei welchem der Leistungswandler durch ein von der Motorgeschwindigkeit abgeleitetes Signal gesteuert wird.

13. Motor nach Anspruch 12, bei welchem der Motor einen Wellenkodierer aufweist, der ein Steuersignal zu dem Leistungswandler liefert.

14. Motor nach einem der Ansprüche 10 bis 13, welcher eine Quelle für variable Frequenz aufweist, die mit dem Leistungswandler verbunden ist, um die Spulenumschaltfrequenz und damit die Motorgeschwindigkeit zu steuern.

## Revendications (Revendications pour l'(les) Etat(s) contractant(s) suivant(s): AT, BE, CH, LI, DK, ES, GR, IE, IT, LU, MC, NL, PT, SE)

1. Moteur à réluctance synchrone à impulsions et n phases (n ≥ 3), avec au moins un ensemble de pilotage associé, comprenant un stator possédant C bobinages et un rotor à pôles saillants comprenant P pôles tels que P = C/n et C/P est un nombre entier, le moteur produisant un couple par réluctance lorsqu'il existe un défaut variable d'alignement entre les pôles du rotor et les pôles magnétiques du stator, et le moteur étant excité par des impulsions commutées de courant si bien que le rotor à pôles saillants suit de manière synchrone un champ magnétique tournant progressivement non sinusoïdal et continu créé par le stator.

2. Moteur selon la revendication 1, piloté par des impulsions de courant appliquées à chaque phase à son tour par l'ensemble ou les ensembles de pilotage, dans lequel le sens des impulsions de courant appliquées à une phase est inversé entre les applications successives des impulsions à ladite phase.

3. Moteur selon la revendication 1 ou 2, dans lequel n = 3 et C = 6.

4. Moteur selon la revendication 1 ou 2, dans lequel P n'est pas égal à 2.

5. Moteur selon la revendication 4, dans lequel P = 4.

6. Moteur selon l'une quelconque des revendications 1 à 5, dans lequel le stator n'est pas saillant.

7. Moteur selon l'une quelconque des revendications 1 à 6, dans lequel un pôle du rotor a une étendue angulaire pratiquement égale à celle d'un bobinage.

8. Moteur selon l'une quelconque des revendications 1 à 7, dans lequel les bobinages occupent pratiquement toute la circonférence du stator.

9. Moteur selon la revendication 8, dans lequel les bobinages se recouvrent.

10. Moteur selon la revendication 8, dans lequel les bobinages dont juxtaposés.

11. Moteur selon l'une quelconque des revendications 1 à 10, dans lequel le rotor et le stator sont feuilletés.

12. Moteur selon l'une quelconque des revendications précédentes, l'ensemble de pilotage au moins comprenant un convertisseur d'énergie alimenté en courant continu.

13. Moteur selon la revendication 12, dans lequel le convertisseur d'énergie comporte des commutateurs électroniques.

14. Moteur selon la revendication 12 ou 13, dans lequel le convertisseur d'énergie est commandé par un signal dérivé de la vitesse du moteur.

15. Moteur selon la revendication 14, dans lequel le moteur comporte un codeur d'arbre qui transmet un signal de commande au convertisseur d'énergie.

16. Moteur selon l'une quelconque des revendications 12 à 15, comprenant une source de fréquence variable connectée au convertisseur d'énergie pour la commande de la fréquence de commutation des bobinages et donc de la vitesse du moteur.

## Revendications (Revendications pour l'(les) Etat(s) contractant(s) suivant(s): DE, FR, GB)

1. Moteur à réluctance synchrone à impulsions et n phases (n ≥ 3), avec au moins un ensemble de pilotage associé, comprenant un stator possédant C bobinages et un rotor à pôles saillants comprenant P pôles tels que P = C/n et C/P est un nombre entier, le moteur produisant un couple par réluctance lorsqu'il existe un défaut variable d'alignement entre les pôles du rotor et les pôles magnétiques du stator, et le moteur étant excité par des impulsions commutées de courant si bien que le rotor à pôles saillants suit de manière synchrone un champ magnétique tournant progressivement non sinusoïdal et continu créé par le stator, et P n'est pas égal à 2.

2. Moteur selon la revendication 1, piloté par des impulsions de courant appliquées à chaque phase à son tour par l'ensemble ou les ensembles de pilotage, dans lequel le sens des impulsions de courant appliquées à une phase est inversé entre les applications successives des impulsions à ladite phase.

3. Moteur selon l'une des revendications 1 et 2, dans lequel P = 4.

4. Moteur selon l'une quelconque des revendications 1 à 3, dans lequel le stator n'est pas saillant.

5. Moteur selon l'une quelconque des revendications 1 à 4, dans lequel un pôle du rotor a une étendue angulaire pratiquement égale à celle d'un bobinage.

6. Moteur selon l'une quelconque des revendications 1 à 5, dans lequel les bobinages occupent pratiquement toute la circonférence du stator.

7. Moteur selon la revendication 6, dans lequel les bobinages se recouvrent.

8. Moteur selon la revendication 6, dans lequel les bobinages sont juxtaposés.

9. Moteur selon l'une quelconque des revendications 1 à 8, dans lequel le rotor et le stator sont feuilletés.

10. Moteur selon l'une quelconque des revendications précédentes, l'ensemble de pilotage au moins comprenant un convertisseur d'énergie alimenté en courant continu.

11. Moteur selon la revendication 10, dans lequel le convertisseur d'énergie comporte des commutateurs électroniques.

12. Moteur selon la revendication 10 ou 11, dans lequel le convertisseur d'énergie est commandé par un signal dérivé de la vitesse du moteur.

13. Moteur selon la revendication 12, dans lequel le moteur comporte un codeur d'arbre qui transmet un signal de commande au convertisseur d'énergie.

14. Moteur selon l'une quelconque des revendications 10 à 13, comprenant une source de fréquence variable connectée au convertisseur d'énergie pour la commande de la fréquence de commutation des bobinages et donc de la vitesse du moteur.
